**Europäisches Patentamt**

**European Patent Office**

**Office européen des brevets**

(19)

(11) Veröffentlichungsnummer: **0 056 229**
**B1**

(12) # EUROPÄISCHE PATENTSCHRIFT

(45) Veröffentlichungstag der Patentschrift:
**03.07.85**

(51) Int. Cl.⁴: **C 08 F 10/00,** C 08 F 4/62,
C 08 F 4/68

(21) Anmeldenummer: **82100005.6**

(22) Anmeldetag: **04.01.82**

(54) **Verfahren zur Herstellung von Trägerkatalysatoren für die Polymerisation von alpha-Olefinen.**

(30) Priorität: **13.01.81 DE 3100736**

(43) Veröffentlichungstag der Anmeldung:
**21.07.82 Patentblatt 82/29**

(45) Bekanntmachung des Hinweises auf die Patenterteilung:
**03.07.85 Patentblatt 85/27**

(84) Benannte Vertragsstaaten:
**AT BE DE FR GB IT NL**

(56) Entgegenhaltungen:
**FR - A - 2 333 001**

**Die Akte enthält technische Angaben, die nach dem Eingang der Anmeldung eingereicht wurden und die nicht in dieser Patentschrift enthalten sind.**

(73) Patentinhaber: **Ruhrchemie Aktiengesellschaft, Bruchstrasse 219, D-4200 Oberhausen 13 (DE)**

(72) Erfinder: **Bahadir, Müfit, Dr. Dipl.-Chem., Birkenweg 13, D-8051 Zolling (DE)**
Erfinder: **Payer, Wolfgang, Dr. Dipl.-Chem., Zedernweg 58, D-4230 Wesel 1 (DE)**
Erfinder: **Förster, Ingrid, Rosenkamp 41, D-4330 Mülheim/Ruhr (DE)**
Erfinder: **Lümmen, Hans-Albert, Habichtstrasse 2, D-4300 Essen 1 (DE)**

(74) Vertreter: **Reichelt, Karl-Heinz, Dr., m. Br. Ruhrchemie Aktiengesellschaft Abt. PLD Postfach 13 01 60, D-4200 Oberhausen 13 (DE)**

EP 0 056 229 B1

## Beschreibung

Die vorliegende Erfindung betrifft ein neues Verfahren zur Herstellung von Katalysatoren für die Polymerisation und Mischpolymerisation von α-Olefinen bei niedrigem Druck.

Für die Herstellung von Trägerkatalysatoren zur Polymerisation von Olefinen sind eine Reihe Verfahren bekannt, die sich im wesentlichen durch die Variation der Imprägnierung, d.h. des Aufbringens einer oder beider Katalysatorkomponenten auf den Träger unterscheiden. Allen bekannten Verfahren ist gemeinsam, dass ein anorganischer Träger mit grosser Oberfläche und hoher Porosität z.B. Siliciumdioxid, Aluminiumoxid, Tonerden, zunächst mit einer Katalysatorkomponente, die man zumeist im Überschuss anwendet, behandelt und der nichtabsorbierte Teil dieser Katalysatorkomponente mit einem inerten Lösungsmittel ausgewaschen wird. Darauf fügt man die zweite Katalysatorkomponente hinzu und wäscht deren Überschuss bzw. lösliche Umsetzungsprodukte, die sich bei der Reaktion der ersten mit der zweiten Katalysatorkomponente ergeben, ebenfalls aus. Diese katalytischen Systeme bestehen aus einer Halogenverbindung eines Übergangsmetalls des Periodensystems der Elemente (PSE) z.B. $TiCl_4$, die auf dem anorganischen Träger fixiert wird, und einer metallorganischen Verbindung von Metallen der ersten bis dritten Hauptgruppe des PSE, die als Reduktionsmittel und gleichzeitig auch als aktiver Bestandteil des Katalysatorsystems dient.

Ein Beispiel für bekannte Verfahren zur Herstellung von Trägerkatalysatoren der vorstehend beschriebenen Art ist die Behandlung von aktiviertem Aluminiumoxid mit einer Halogenverbindung des Titans. Man erhält ein festes Reaktionsprodukt, das abgetrennt, gewaschen und getrocknet wird. Anschliessend wird es in einem inerten Lösungsmittel suspendiert und mit einer Aluminiumtrialkylverbindung umgesetzt (DE-PS 2 123 357).

Nach der DE-OS 2 058 852 wird ein Doppeloxid des Magnesiums und Aluminiums in Titantetrachlorid suspendiert und der entstandene Feststoff durch Filtration abgetrennt, ausgewaschen und getrocknet. Darauf wird die Feststoffkomponente des Katalysatorsystems mit einer Trialkylverbindung des Aluminiums umgesetzt.

Nach einem weiteren Verfahren, das in der DE-OS 2 109 273 beschrieben ist, wird ein Träger aus Siliciumdioxid-Aluminiumoxid oder einem Siliciumoxid-Aluminiumoxid-Gemisch mit einer aluminiumorganischen oder magnesiumorganischen Verbindung beladen. Anschliessend wird das erhaltene feste Produkt filtriert, gewaschen und getrocknet, in einer Halogenverbindung eines Übergangsmetalles, z.B. in $TiCl_4$ suspendiert und erhitzt. Das Reaktionsprodukt wird ebenfalls abfiltriert und gewaschen und nach Umsetzung mit einer Aluminiumtrialkylverbindung als Katalysator zur Polymerisation und Mischpolymerisation von Olefinen verwendet.

Die bekannten Verfahren, von denen einige vorstehend als Beispiele näher beschrieben wurden, weisen eine Reihe Nachteile auf. So ist es sehr schwierig, die vom Trägermaterial adsorbierende Menge der Metallverbindung reproduzierbar einzustellen. Abhängig von den Bedingungen, unter denen die Adsorption vorgenommen wird, und dem eingesetzten Trägermaterial werden unterschiedliche Mengen der Katalysatorkomponenten vom Träger aufgenommen. Ferner müssen die überschüssigen Katalysatorkomponenten mit Lösungsmitteln, z.B. Kohlenwasserstoffen ausgewaschen werden. Bei diesem Arbeitsschritt fallen erhebliche Mengen Waschlösung an, die zersetzt und durch Energie verbrauchende Massnahmen, z.B. durch Destillation wiedergewonnen werden müssen. Überdies führt die Zersetzung der Waschlösungen zur Bildung umweltbelastender Abwässer. Schliesslich ist nicht zu übersehen, dass die zum Auswaschen verwendeten Lösungsmittel, z.B. Kohlenwasserstoffe wie Hexan, Verunreinigungen enthalten, die den Katalysator schädigen. Bei jedem Waschvorgang wird ein nicht näher bestimmter Teil des Katalysators desaktiviert. Diese Schädigung des Katalysators wird um so spürbarer, je geringer die Metallverbindungs-Konzentration auf der Oberfläche des Trägers gewählt wird.

Bei Verwendung von Grignard-Verbindungen als aktive Komponenten auf dem Träger muss Äther im Vakuum entfernt werden, ein Vorgang, der grosstechnisch nur schwer realisierbar ist.

Es bestand daher die Aufgabe, ein Verfahren zur Herstellung von Trägerkatalysatoren für die Polymerisation von α-Olefinen zu entwickeln, das die aufgezeigten Nachteile vermeidet und insbesondere eine präzise Einstellung der Metallkonzentration auf der Trägeroberfläche erlaubt.

Die Erfindung besteht in einem Verfahren zur Herstellung von Katalysatoren, deren Komponente A aus dem Produkt der Umsetzung von Verbindungen der Metalle der IV. bis VI. Nebengruppe des Periodensystems der Elemente (PSE) mit organischen Verbindungen der Metalle der I. bis III. Hauptgruppe des PSE und eines anorganischen Trägerstoffes bei Temperaturen zwischen –60°C und +40°C besteht und deren Komponente B eine metallorganische Verbindung ist. Es ist dadurch gekennzeichnet, dass man zur Herstellung der Komponente A den anorganischen Trägerstoff in einem inerten Lösungsmittel suspendiert und unter Ausschluss von Feuchtigkeit und Sauerstoff die Verbindungen der Metalle der IV. bis VI. Nebengruppe des PSE sowie die Verbindungen der Metalle der I. bis III. Hauptgruppe des PSE in flüssiger und/oder gelöster Form gleichzeitig aber getrennt dem suspendierten Trägerstoff zusetzt, wobei das molare Verhältnis der Verbindungen der Nebengruppenmetalle zu denen der Hauptgruppenmetalle 1:3 bis 3:1 beträgt.

Überraschenderweise gelingt es, nach der neuen Arbeitsweise hochaktive Trägerkatalysatoren für die Polymerisation und Copolymerisation von Olefinen leicht reproduzierbar herzustellen. Der Herstellungsprozess gestaltet sich überaus einfach, vermeidet die Verwendung und nachfolgende Aufarbeitung grosser Flüssigkeitsmengen und die Schädigung des Katalysators durch eine Vielzahl von Waschvorgängen.

Nach dem in der FR-A 2 333 001 beschriebenen Verfahren setzt man bei der Herstellung der Katalysatorkomponente A die Reaktionspartner zwar auch getrennt, jedoch nacheinander und nicht, wie erfindungsgemäss, gleichzeitig dem Trägerstoff zu. Bei dieser Arbeitsweise resultieren Katalysatoren, die eine geringere Aktivität aufweisen als die nach dem erfindungsgemässen Verfahren hergestellten. Überdies erfordert der bekannte Herstellungsprozess den Einsatz von Siliciumdioxid und/oder Aluminiumoxid mit bestimmtem Hydroxylgruppengehalt, während nach dem neuen Verfahren selbst Glaskugeln eingesetzt werden können.

Das erfindungsgemässe Verfahren eignet sich zur Herstellung von Katalysatoren, die aus dem Umsetzungsprodukt von Verbindungen der Metalle der IV. bis VI. Nebengruppe des PSE mit organischen Verbindungen der Metalle der I. bis III. Hauptgruppe des PSE (Komponente A) bestehen und mit metallorganischen Verbindungen (Komponente B) aktiviert werden, der verschiedensten stofflichen Zusammensetzung.

Als Verbindungen der Metalle der IV. bis VI. Nebengruppe, die bei der Gewinnung der Komponente A verwendet werden, kommen z.B. Titan(IV)-Verbindungen wie $TiCl_4$, $TiBr_4$, $TiCl_3$ $(OC_2H_5)$, $TiCl_3$ $(O-n-C_3H_7)$, $TiCl_2$ $(O-n-C_4H_9)_2$, $TiCl$ $(O-i-C_3H_7)_3$, $Ti$ $(OC_2H_5)_4$, ferner Vanadiumverbindungen wie $VCl_4$, $VOCl_3$, Verbindungen des Zirkons, Molybdäns und Wolframs in Betracht.

Die ebenfalls zur Herstellung der Komponente A eingesetzten organischen Verbindungen der I. bis III. Hauptgruppe sind z.B. Lithiumalkyle bzw. -aryle, Dialkyl- und Diarylmagnesiumverbindungen der allgemeinen Formel $MgR_mX_{2-m}$, wobei R für unverzweigte oder verzweigte Alkylreste mit ein bis sechzehn Kohlenstoffatomen und/oder unsubstituierte oder substituierte Phenylreste bedeutet, X Chlor, Brom oder Jod ist und m für 1 oder 2 steht, wie Dimethyl- und Diethylmagnesium, Diphenylmagnesium sowie Aluminiumverbindungen der allgemeinen Formel $AlR_mX_{3-m}$, wobei R für unverzweigte oder verzweigte Alkylreste mit ein bis sechzehn Kohlenstoffatomen und/oder unsubstituierte oder substituierte Phenylreste und X für Chlor, Brom, Jod oder Wasserstoff steht, m bedeutet 1 bis 3. Zu den organischen Aluminiumverbindungen zählen auch die Umsetzungsprodukte von Aluminiumtrialkylen oder Aluminiumdialkylhydriden, die Alkylreste mit 1 bis 16 Kohlenstoffatomen enthalten, mit $C_4$- bis $C_{20}$-Dienen wie 1,4-Butadien, Isopren, 1,3-Pentadien, Myrcen. Beispiele für geeignete organische Aluminiumverbindungen sind Aluminiumtrialkyl wie
$Al(C_2H_5)_3$, $Al(n-C_3H_7)_3$, $Al(n-C_4H_9)_3$, $Al(i-C_4H_9)_3$, $Al(n-C_8H_{17})_3$, $Al(C_2H_5)_2H$, $Al(C_3H_7)_2H$, $Al(i-C_4H_9)_2H$, Dialkylmonochloride wie $(C_2H_5)_2AlCl$, $(i-C_4H_9)_2AlCl$ und Alkylaluminiumsesquichloride wie $(C_2H_5)_3Al_2Cl_3$. Besonders geeignet sind die Umsetzungsprodukte von $Al(i-C_4H_9)_3$ oder $Al(i-C_4H_9)_2H$ mit Isopren, die unter dem Namen «Aluminiumisoprenyl» im Handel sind.

Trägerstoffe, die im Rahmen des erfindungsgemässen Verfahrens eingesetzt werden, sind z.B. anorganische Oxide wie Siliciumdioxid, gefälltes Kieselgel, Aerosil, Aluminiumoxid, Magnesiumoxid, Doppelcarbonate, z.B. $CaMg$ $(CO_3)_2$ und Mikroglaskugeln, die z.B. unter der Bezeichnung Ballotini-Mikroglas erhältlich sind, sowie Glasfasern und Kohlenstoffasern. Ebenso sind Metallhydroxide, -chloride und Oxichloride geeignet, z.B. $Mg(OH)_2$, $MgCl_2$.

Die Teilchengrösse der Trägerstoffe ist nicht kritisch, sie bestimmt aber die Teilchengrösse des Polymerisats. Vorzugsweise wählt man Feststoffpartikel einer Grösse von 1 µm bis 250 µm.

Zweckmässig werden die Trägerstoffe vor der Umsetzung längere Zeit, z.B. 2 bis 20 Stunden auf Temperaturen von 105°C bis 900°C erhitzt, um sie vollständig zu trocknen und gegebenenfalls zu aktivieren.

Zur Durchführung der Umsetzung suspendiert man den Trägerstoff in einem inerten Suspensionsmittel. Geeignet sind z.B. aliphatische oder cycloaliphatische Kohlenwasserstoffe wie Pentan, Hexan, Heptan, Cyclohexan, Methylcyclohexan; auch Benzin- und Dieselölfraktionen sind brauchbar. Das Suspensionsmittel muss sorgfältig von Sauerstoff, Schwefelverbindungen und Feuchtigkeit befreit worden sein, ebenso muss die Reaktion unter striktem Ausschluss von Sauerstoff und Feuchtigkeit durchgeführt werden.

Zu der Suspension aus Suspensionsmittel und Trägerstoff werden gleichzeitig aus getrennten Vorratsgefässen die Verbindungen eines Metalls der IV. bis VI. Nebengruppe und die Verbindungen eines Metalls der I. bis II. Hauptgruppe gegeben. Die Verbindung von Metallen der I. bis III. Hauptgruppe ist in einem inerten Lösungsmittel, z.B. dem Suspensionsmittel gelöst; die Verbindung von Metallen der IV. bis VI. Nebengruppe kann z.B. ebenfalls im Suspensionsmittel gelöst eingesetzt werden, jedoch ist es auch möglich, sie unverdünnt zu verwenden.

Das molare Verhältnis zwischen den Verbindungen von Metallen der IV. bis VI. Nebengruppe und der I. bis III. Hauptgruppe ist abhängig von der Zahl der organischen Reste an den Hauptgruppenmetallen und beträgt im allgemeinen 1:3 bis 3:1, insbesondere 1:1 bis 3:1.

Die Menge des Trägerstoffes richtet sich nach der Konzentration der aktiven Bestandteile (Verbindungen von Metallen der IV. bis VI. Nebengruppe), die auf dem Träger eingestellt werden soll. Diese Konzentration liegt je nach gewähltem Metall zwischen 0,01 und 15 Gew.-% Metall bezogen auf den Trägerstoff. Bei Verwendung von Titanverbindungen wählt man z.B. eine Konzentration von 0,01 bis 10 Gew.-% Metall bezogen auf den Trägerstoff.

Die Zugabe der Reaktionsteilnehmer zur gut gerührten Suspension erfolgt langsam, d.h. unter Vermeidung von partiellen Überkonzentrationen der reduzierten Übergangsmetallverbindung, im Verhältnis zur vorgelegten Trägermenge bei Temperaturen von –60°C bis +40°C. Temperaturen im Bereich von –20°C bis +10°C werden bevorzugt.

Im folgenden wird das neue Verfahren am Beispiel der Umsetzung von $TiCl_4$ mit einer Aluminiumtrialkylverbindung in einem Kohlenwasserstoff als Suspensionsmittel beschrieben und der sich abspielende Prozess gedeutet.

Aus $TiCl_4$ und Aluminiumalkyl, die getrennt aber gleichzeitig tropfenweise zugesetzt werden, wird in der Trägersuspension eine sehr verdünnte $TiCl_3$-Lösung gebildet, aus der $TiCl_3$ nicht auskristallisiert, da zuwenig $TiCl_3$-Moleküle vorhanden sind. Demgegenüber ist eine sehr grosse Trägerstoffoberfläche vorhanden, so dass das im Suspensionsmittel schwerlösliche $TiCl_3$ auf der Oberfläche des Trägerstoffes adsorbiert wird. Die Trägerstoffteilchen wirken hierbei als Kristallisationskeime. Um die Bildung von freien $TiCl_3$-Kristallen als Konkurrenzreaktion zu unterdrücken, muss die simultane Zugabe von $TiCl_4$ und $AlR_3$ sehr langsam und bei möglichst niedrigen Temperaturen erfolgen. Durch schnelles Rühren der Suspension wird die Bildung lokaler $TiCl_3$-Überkonzentrationen verhindert.

Die Beladung der Trägeroberfläche kann mikroskopisch verfolgt werden. Fügt man die Reaktanten schnell und/oder bei erhöhten Temperaturen zu, erkennt man bei stärkerer Vergrösserung isolierte $TiCl_3$-Kristalle neben den durch die $TiCl_3$-Adsorption braungefärbten Trägerstoffteilchen. Bei langsamer Zugabe und bei niedrigen Temperaturen erhält man dagegen nur gefärbte Trägerteilchen.

Da der Trägerstoff lediglich als Kristallisationskeim für das $TiCl_3$ fungiert, ist seine Oberflächenstruktur und -chemie nicht kritisch, ein hoher Hydroxylgehalt der Oberfläche ist jedoch zu vermeiden.

Bei Verwendung von Gläsern (Ballotini-Mikroglas) als Trägerstoff zeigt sich die Überlegenheit der erfindungsgemässen Arbeitsweise z.B. bei der Beladung mit $TiCl_3$ besonders deutlich. Versucht man auf die Mirkoglaskugeln $TiCl_4$ dadurch aufzubringen, dass man die Glaskugeln in einer Lösung von $TiCl_4$ in einer Benzinfraktion suspendiert, so findet man nach Filtration der Mutterlauge und Nachwaschen des Rückstandes mit Benzin das gesamte Titan im Filtrat wieder. Auf der Glasoberfläche wird also kein $TiCl_4$ dauerhaft adsorbiert. Wendet man jedoch die erfindungsgemässe Arbeitsweise an, so wird das gesamte angebotene Titan auf der Glasoberfläche fixiert; mikroskopisch lässt sich diese Adsorption durch die Färbung der Glaskugeln und das Fehlen von $TiCl_3$-Kristallen leicht nachweisen.

Die nach dem erfindungsgemässen Verfahren hergestellte suspendierte Katalysatorkomponente (Komponente A) wird nach Aktivierung mit einer metallorganischen Verbindung (Komponente B) als Katalysator zur Homo- und Copolymerisation von α-Olefinen in Lösung, in der Gasphase und in Suspension eingesetzt.

Als Aktivatoren für die Katalysatorkomponente A können alle aluminiumorganischen Verbindungen verwendet werden, die auch zur Herstellung der Komponente A eingesetzt werden. Besonders geeignete Verbindungen sind $AlR_3$ und $AlR_2Cl$, wobei R für unverzweigte oder verzweigte Alkylreste mit 1 bis 16 Kohlenstoffatomen steht. Das molare Verhältnis von Nebengruppen- zu Hauptgruppenmetall im fertigen Polymerisationskatalysator beträgt 1:100 bis 1:0,5.

Die erfindungsgemässen Katalysatoren sind sehr aktiv. Sie ergeben bei der Polymerisation von Ethylen allein und zusammen mit α-Olefinen so hohe Polymerisatausbeuten, dass eine Entfernung des Katalysators aus dem Produkt nicht erforderlich ist.

Damit eröffnet sich zugleich die Möglichkeit, unterschiedliche Füllstoffe unabhängig von ihrer Oberflächenchemie direkt einzupolymerisieren.

Die Polymerisation verläuft bei 30 bis 120°C und 2 bis 100 bar Druck.

Beispiel 1
Katalysatorherstellung
Gefälltes Siliciumdioxid mit einer BET-Oberfläche von 300 m²/g und einem Porenvolumen von 1,65 cm³/g (z.B. von der Fa. Grace unter der Bezeichnung GRACE 952 angeboten) wird 6 Stunden bei 600°C getrocknet. In einem trockenen, mit $N_2$ gespülten und mit einem Blattrührer ausgerüsteten 1-l-Dreihalskolben werden 20 g des trockenen Siliciumdioxids bei 450 Upm und 0°C in 125 ml einer Kohlenwasserstofffraktion (Siedebereich: 140–170°C) suspendiert. In diese Suspension werden aus zwei getrennten Vorlagen 2,8 mmol $TiCl_4$ und 3,2 mmol Isoprenylaluminium (IPRA), jeweils gelöst in je 100 ml des als Suspensionsmittel verwendeten Kohlenwasserstoffs im Verlauf von 2 Stunden gleichzeitig zugetropft. Anschliessend wird die Suspension weitere 2,5 Stunden bei 0°C gerührt. Die Titankonzentration in der Suspension errechnet sich zu 8,6 mg-Atom Ti/l.

Polymerisation
In einem trockenen, mit $N_2$ gespülten 3 l-Glasautoklaven werden 2 l des für die Katalysatorherstellung verwendeten Kohlenwasserstoffs 115 ml Katalysatorsuspension und 10 mmol IPRA auf 80°C erhitzt, es wird Ethylen bis zu einem Druck von 4 bar eingeleitet; dieser Druck wird während der Polymerisation, die 5 Stunden dauert, durch weitere Ethylenzufuhr aufrechterhalten. Schliesslich wird durch Zugabe von Isopropanol die Polymerisation abgebrochen, das gebildete Polyethylen abfiltriert und getrocknet. Es werden insgesamt 725 g Polyethylen erhalten, entsprechend einem Katalysatorverbrauch von 1,4 mg-Atom Ti/kg Polyethylen.

Die Eigenschaften des Produktes sind in Tabelle 1 aufgeführt.

Vergleichsbeispiel 1
Katalysatorherstellung
Die wie in Beispiel 1 vorbereitete Suspension aus 20 g getrocknetem Siliciumdioxid in 125 ml Kohlenwasserstoff wird bei 0°C und 450 Upm innerhalb von 2 Stunden mit 2,8 mmol $TiCl_4$, gelöst in 100 ml Kohlenwasserstoff versetzt und weitere 4,5 Stunden bei derselben Temperatur und mit derselben Geschwindigkeit gerührt. Anschliessend wird das nicht umgesetzte $TiCl_4$ durch wiederholtes Dekantieren herausgewaschen. Die Titankonzentration der Suspension beträgt 12,0 mg-Atom Ti/l, entsprechend einem Umsetzungsgrad von 96%.

Polymerisation

Die Polymerisation wird analog Beispiel 1 unter Einsatz von 83 ml Katalysatorsuspension und 10 mmol IPRA durchgeführt. Es werden 470 g Polyethylen erhalten, entsprechend einem Katalysatorverbrauch von 2,1 g-Atom Ti/kg PE. Die Produkteigenschaften sind in Tabelle 1 aufgeführt.

Beispiel 2
Katalysatorherstellung

Die Katalysatorherstellung erfolgt wie in Beispiel 1, mit dem Unterschied, dass die molaren Einsatzmengen von $TiCl_4$ und IPRA vervierfacht werden. Alle übrigen Einsatzmengen und Reaktionsbedingungen bleiben unverändert. Die Titankonzentration in der Suspension errechnet sich zu 34,4 mg-Atom Ti/l.

Polymerisation

Unter Einsatz von 29 ml Katalysatorsuspension und 10 mmol IPRA wird unter den Bedingungen von Beispiel 1 polymerisiert. Es werden 730 g Polyethylen erhalten, entsprechend einem Kontaktverbrauch von 1,4 mg-Atom Ti/kg PE. Die Produkteigenschaften sind in Tabelle 1 wiedergegeben.

Beispiel 3
Katalysatorherstellung

Mikroglaskugeln aus Na-Ca-Silicatglas mit feuerpolierter glatter Oberfläche und ohne Poren (sie werden zum Verstärken von Kunststoffen als Füllstoffe z.B. von der Fa. Ballotini – BALLOTINI-Mikroglaskugeln – angeboten) werden 12 Stunden in destilliertem Wasser suspendiert, anschliessend abfiltriert und 4 Stunden bei 120°C getrocknet. Unter den apparativen Bedingungen des Beispiels 1 werden 20 g vorbehandelte Mikroglaskugeln, 11,2 mmol $TiCl_4$ und 13,0 mmol IPRA in insgesamt 325 ml Kohlenwasserstoff zur Katalysatorherstellung eingesetzt. Die Titankonzentration in der fertigen Katalysatorsuspension errechnet sich zu 34,4 mg-Atom Ti/l.

Polymerisation

In einem 3 l-Stahlautoklaven werden unter den Polymerisationsbedingungen des Beispiels 1 13,8 ml Katalysatorsuspension und 5 mmol IPRA eingesetzt. Es werden 785 g Polyethylen erhalten, entsprechend einem Katalysatorverbrauch von 0,6 mg-Atom Ti/kg PE. Die Produkteigenschaften sind in Tabelle 1 wiedergegeben.

Vergleichsbeispiel 2
Katalysatorherstellung

Die wie in Beispiel 3 vorbereitete Suspension aus 20 g vorbehandelten Mikroglaskugeln in 125 ml Kohlenwasserstoff wird bei 0°C und 450 Upm innerhalb von 1 Stunde mit 11,2 mmol $TiCl_4$, gelöst in 100 ml Kohlenwasserstoff, versetzt und weitere 4 Stunden bei derselben Temperatur und mit derselben Geschwindigkeit gerührt. Anschliessend wird nicht umgesetztes $TiCl_4$ durch wiederholtes Dekantieren herausgewaschen. In der erhaltenen Suspension ist kein Titan nachzuweisen. Unter diesen Bedingungen wird also $TiCl_4$ auf der Glasoberfläche nicht adsorbiert.

Beispiel 4
Katalysatorherstellung

Pulverförmiges Ca-Mg-Doppelcarbonat (z.B. als Füllstoff für Kunststoffe von der Fa. Norwegian Talc unter dem Namen Microdol Extra angeboten) wird 6 Stunden bei 600°C getrocknet. Unter den apparativen Bedingungen des Beispiels 1 werden 20 g vorbehandeltes Pulver, 45 mmol $TiCl_4$ und 52 mmol IPRA in insgesamt 310 ml Kohlenwasserstoff zur Katalysatorherstellung eingesetzt. Die Titankonzentration in der fertigen Katalysatorsuspension errechnet sich zu 145 mg-Atom Ti/l.

Polymerisation

Unter Einsatz von 3,5 ml Katalysatorsuspension und 5 mmol IPRA wird in der Apparatur und unter den Bedingungen von Beispiel 1 polymerisiert. Es werden 725 g Polyethylen erhalten, entsprechend einem Katalysatorverbrauch von 0,7 mg-Atom Ti/kg PE. Die Produkteigenschaften sind in Tabelle 1 aufgeführt.

Tabelle 1: Produkteigenschaft

| Eigenschaft | Kataly-sator-verbr. | ZST[1] | $a_{ks}$[2] EK[3] | $a_{ks}$[2] DK[4] | bei 120°C $\sigma B$[5] | $\sigma R$[6] | $\delta R$[7] | Dichte | Kugel-druck-härte | Schütt-dichte |
|---|---|---|---|---|---|---|---|---|---|---|
| Beispiel | (mg-Atom Ti/kg PE) | (N/mm²) | (mJ/mm²) | | (N/mm²) | | % | (g/cm³) | (N/mm²) | (g/cm³) |
| Beispiel 1 | 1,4 | 0,48 | 160 | 235 | 3,2 | 26,6 | 782 | 0,942 | 38 | 0,38 |
| Vergleichs-beispiel 1 | 2,1 | 0,74 | 153 | 200 | 3,3 | 27,8 | 798 | 0,943 | 39 | 0,46 |
| Beispiel 2 | 1,4 | 0,46 | 168 | 259 | 3,4 | 28,3 | 825 | 0,936 | 38 | 0,38 |

Tabelle 1 (Fortsetzung) Produkteigenschaft

| Eigenschaft | Kataly-sator-verbr. | ZST[1] | $a_{ks}$[2] EK[3] | $a_{ks}$[2] DK[4] | bei 120°C $\sigma_B$[5] | $\sigma_R$[6] | $\delta_R$[7] | Dichte | Kugel-druck-härte | Schütt-dichte |
|---|---|---|---|---|---|---|---|---|---|---|
| Beispiel | (mg-Atom Ti/kg PE) | (N/mm²) | (mJ/mm²) | | (N/mm²) | | % | (g/cm³) | (N/mm²) | (g/cm³) |
| Beispiel 3 | 0,6 | 0,32 | 166 | 267 | 3,8 | 32,9 | 975 | 0,933 | 38 | 0,25 |
| Beispiel 4 | 0,7 | 0,29 | 155 | 234 | 3,5 | 33,2 | 1038 | 0,931 | 37 | 0,36 |

[1] ZTS = Fliesswert
[2] $a_{ks}$ = Kerbschlagzähigkeit
[3] EK = Einzelkerb
[4] DK = Doppelkerb
[5] $\sigma_B$ = Streckspannung
[6] $\sigma_R$ = Reissfestigkeit
[7] $\delta_R$ = Reissdehnung

Beispiele 5-10

In den folgenden Beispielen 5-10 wird mit den Einsatzmengen und unter den Reaktionsbedingungen des Beispiels 2 gearbeitet, d.h. 20 g getrocknetes Siliciumdioxid (GRACE 952) werden mit 11,2 mmol Übergangsmetallverbindung und 12,8 mmol metallorganischer Verbindung simultan zur Katalysatorherstellung eingesetzt, wobei die Metallkomponenten sowohl bei der Katalysatorherstellung als auch bei der Aktivierung in der Homopolymerisation von Ethylen variiert werden.

Die Polymerisationen erfolgen unter Einsatz von 1 mg-Atom Katalysatorkomponente bezogen auf das Übergangsmetall sowie 10 mmol Aluminiumalkylverbindung unter den Bedingungen von Beispiel 1.

In Tabelle 2 sind die Katalysatorkomponenten und Aktivatoren für die Polymerisation und die Produkteigenschaften der erhaltenen Polymere aufgeführt.

Tabelle 2a: Katalysatorkomponenten

| Beispiele | Übergangs-metallverbindung | metallorganische Verbindung | Aktivator | Kontaktverbrauch[1] (mg-Atom M/kg PE) |
|---|---|---|---|---|
| 5 | $TiCl_4$ | IPRA[2] | TNOA[3] | 1,6 |
| 6 | $TiCl_4$ | TNOA | TNOA | 2,0 |
| 7 | $TiCl_4$ | TNOA | IPRA | 1,5 |
| 8 | $TiCl_4$ | DEAC[4] | IPRA | 2,2 |
| 9 | $VOCL_3$ | IPRA | IPRA | 1,7 |
| 10 | $Ti(OEt)_4$ | BuOcMg[5] | DEAC | 2,4 |

[1] Katalysatorverbrauch bezogen auf das Übergangsmetall;
[2] IPRA = Isoprenylaluminium;
[3] TNOA = Tri-n-Octylaluminium;
[4] DEAC = Di-ethylaluminiumchlorid;
[5] BuOcMg = (n-Butyl)$_{1,5}$(n-Octyl)$_{0,5}$-magnesium

Tabelle 2b: Polymereigenschaften

| Beispiele | ZST (N/mm²) | $a_{ks}$ EK [mJ/mm²] | $a_{ks}$ DK | bei 120°C $\sigma_B$ [N/mm²] | $\sigma_R$ | $\delta_R$ (%) | Dichte (g/cm³) | Kugeldruck-härte (N/mm²) | Schütt-dichte (g/cm³) |
|---|---|---|---|---|---|---|---|---|---|
| 5 | 0,64 | 155 | 208 | 3,7 | 26,4 | 788 | 0,944 | 41 | 0,39 |
| 6 | 0,70 | 154 | 187 | 3,3 | 22,0 | 713 | 0,941 | 38 | 0,27 |
| 7 | 0,28 | 157 | 225 | 3,7 | 30,7 | 968 | 0,938 | 38 | 0,30 |
| 8 | 0,37 | 142 | 191 | 3,6 | 29,5 | 903 | 0,941 | 37 | 0,13 |
| 9 | 1,30 | 111 | 131 | 3,8 | 32,4 | 796 | 0,929 | 34 | 0,19 |
| 10 | 0,18 | 146 | 200 | 3,8 | 24,2 | 897 | 0,938 | 37 | 0,09 |

**Patentansprüche**

1. Verfahren zur Herstellung von Katalysatoren, deren Komponente A aus dem Produkt der Umsetzung von Verbindungen der Metalle der IV. bis VI. Nebengruppe des Periodensystems der Elemente (PSE) mit organischen Verbindungen der Metalle der I. bis III. Hauptgruppe des PSE und eines anorganischen Trägerstoffes bei Temperaturen zwischen –60°C und +40°C besteht und deren Komponente B eine metallorganische Verbindung ist, dadurch gekennzeichnet, dass man zur Herstellung der Komponente A den anorganischen Trägerstoff in einem inerten Lösungsmittel suspendiert und unter Ausschluss von Feuchtigkeit und Sauerstoff die Verbindungen der Metalle der IV. bis VI. Nebengruppe des PSE sowie die Verbindungen der Metalle der I. bis III. Hauptgruppe des PSE in flüssiger und/oder gelöster Form gleichzeitig aber getrennt dem suspendierten Trägerstoff zusetzt, wobei das molare Verhältnis der Verbindungen der Nebengruppenmetalle zu denen der Hauptgruppenmetalle 1:3 bis 3:1 beträgt.

2. Verfahren nach Anspruch 1, dadurch gekennzeichnet, dass man als anorganische Trägerstoffe Oxide des Magnesiums, Aluminiums oder Siliciums, Carbonate oder Doppelcarbonate des Magnesiums und/oder Calciums, Glaskugeln oder Glasfasern, Magnesiumhydroxid, Magnesiumoxichlorid und/oder Magnesiumchlorid verwendet.

3. Verfahren nach Anspruch 1 und 2, dadurch gekennzeichnet, dass man als Verbindungen der Metalle der IV.-VI. Nebengruppe des PSE Halogenide, Halogenalkoxide und/oder Alkoxide des Titans und/oder des Vanadiums verwendet.

4. Verfahren nach Anspruch 1 bis 3, dadurch gekennzeichnet, dass man als organische Verbindungen von Metallen der I.-III. Hauptgruppe des PSE Verbindungen der allgemeinen Formel $MgR_mX_{2-m}$, $AlR_nX_{3-n}$ verwendet, wobei R unverzweigte oder verzweigte Alkylreste mit ein bis sechzehn Kohlenstoffatomen und/oder unsubstituierte oder substituierte Phenylreste bedeutet, X ein Halogenatom ist, m für 1 oder 2 und n für 1 bis 3 steht.

5. Verwendung der Katalysatoren nach Anspruch 1 bis 4 zur Homo- bzw. Copolymerisation von α-Olefinen in Lösung, Suspension oder Gasphasen.

## Claims

1. Process for preparing catalysts whose component A consists of the reaction product of compounds of metals of subgroups IV to VI of the Periodic System of the Elements (PSE) with organic compounds of the metals of main groups I to III of the PSE and an inorganic carrier at temperatures between –60°C and +40°C, and whose component B is an organometallic compound, characterised in that in order to prepare the component A the inorganic carrier is suspended in an inert solvent and the compounds of the metals of subgroups IV to VI of the PSE as well as the compounds of the metals of main groups I to III of the PSE are added in liquid and/or dissolved form and simultaneously but separately to the suspended carrier, with the exclusion of moisture and oxygen, the molar ratio of the compounds of the subgroup metals to those of the main group metals being 1:3 to 3:1.

2. Process according to claim 1, characterised in that oxides of magnesium, aluminium or silicon, carbonates or double carbonates of magnesium and/or calcium, glass spheres or glass fibres, magnesium hydroxide, magnesium oxychloride and/or magnesium chloride are used as inorganic carriers.

3. Process according to claims 1 and 2, characterised in that halides, halogen alkoxides and/or alkoxides of titanium and/or vanadium are used as compounds of the metals of subgroups IV to VI of the PSE.

4. Process according to claims 1 to 3, characterised in that compounds of the general formula $MgR_mX_{2-m}$, $AlR_nX_{3-n}$ are used as organic compounds of metals of the main groups I to III of the PSE, wherein R denotes straight chain or branched alkyl radicals with 1 to 16 carbon atoms and/or unsubstituted or substituted phenyl radicals, X is a halogen atom, and m is 1 or 2 and n is 1 to 3.

5. Use of the catalysts according to claims 1 to 4 for the homopolymerisation or copolymerisation of α-olefins in solution, suspension or gas phase.

## Revendications

1. Procédé de préparation de catalyseur dont le composant A consiste en le produit de réaction de composés des métaux des sous-groupes IV à VI de la Classification Périodique des Eléments (CPE) avec des composés organiques des métaux des groupes principaux I à III de la CPE et une matière de support minérale à des températures de –60 à +40°C et dont le composant B est un composé organométallique, caractérisé en ce que, pour la préparation du composant A, on met la matière de support minérale en suspension dans un solvant inerte et on ajoute à la matière de support en suspension, à l'abri de l'humidité et de l'oxygène, les composés des métaux des sous-groupes IV à VI de la CPE et les composés des métaux des groupes principaux I à III de la CPE à l'état liquide et/ou dissous, simultanément mais séparément, le rapport molaire des composés des métaux des sous-groupes et des composés des métaux des groupes principaux allant de 1:3 à 3:1.

2. Procédé selon la revendication 1, caractérisé en ce que l'on utilise en tant que matières de support minérales des oxydes du magnésium, de l'aluminium ou du silicium, des carbonates ou des carbonates doubles du magnésium et/ou du calcium, des billes de verre ou des fibres de verre, de l'hydroxyde de magnésium, de l'oxychlorure de magnésium et/ou du chlorure de magnésium.

3. Procédé selon les revendications 1 et 2, caractérisé en ce que l'on utilise en tant que composés des métaux des sous-groupes IV à VI de la CPE des halogénures, des halogénoalcoolates et/ou des alcoolates du titane et/ou du vanadium.

4. Procédé selon les revendications 1 à 3, caractérisé en ce que l'on utilise en tant que composés organiques de métaux des groupes principaux I à III de la CPE des composés de formule $MgR_mX_{2-m}$, $AlR_nX_{3-n}$, R représentant des groupes alkyle droits ou ramifiés en C1–C16 et/ou des groupes phényle substitués ou non, X représente un atome d'halogène, m est 1 ou 2, et n a une valeur de 1 à 3.

5. Utilisation des catalyseurs selon les revendications 1 à 4, pour l'homo- ou la co-polymérisation d'alpha-oléfines en solution, en suspension ou en phase gazeuse.